# FASCICULE DE BREVET EUROPEEN

(11) **EP 3 421 319 B1**
(45) Date de publication et mention de la délivrance du brevet: **12.05.2021**
(21) Numéro de dépôt: 18177200.5
(22) Date de dépôt: 12.06.2018
(51) Int. Cl.: B61D 37/00, B60R 5/00

(54) **DISPOSITIF DE RANGEMENT A PROXIMITE DU PLAFOND D'UN VEHICULE DE TRANSPORT**
VORRICHTUNG ZUM VERSTAUEN IN DER NÄHE DER DECKE EINES TRANSPORTFAHRZEUGS
STORAGE DEVICE NEAR THE CEILING OF A TRANSPORT VEHICLE

(30) Priorité: 29.06.2017 FR 1756051
(43) Date de publication de la demande: 02.01.2019
(73) Titulaire: SNCF Mobilités, 93200 Saint-Denis (FR)
(72) Inventeur: OPIGEZ, Jérôme, 59190 Hazebrouck (FR)
(74) Mandataire: Argyma

(56) Documents cités:
- DE-A1-102014 203 893
- DE-C- 508 576
- FR-A1- 2 908 383
- FR-A1- 2 965 525
- US-A- 2 093 359
- US-A- 2 973 869

## Description

### DOMAINE TECHNIQUE GENERAL ET ART ANTERIEUR

La présente invention concerne le domaine du rangement d'un bagage et vise, plus particulièrement, le rangement d'un bagage dans un véhicule de transport (train, avion, bus, bateau, etc.) à proximité de son plafond.

De manière classique, un véhicule ferroviaire comporte plusieurs voitures ferroviaires associées consécutivement ensemble. Une voiture ferroviaire comporte un ou plusieurs compartiments à l'entrée de la voiture afin de stocker des bagages volumineux. En outre, la voiture ferroviaire comporte plusieurs dispositifs de rangement situés en hauteur, à proximité du plafond, au-dessus des sièges des voyageurs. Un tel dispositif de rangement se présente sous la forme d'une paroi de support sensiblement horizontale permettant le rangement d'un bagage entre le dispositif de rangement et le plafond de la voiture ferroviaire. Un tel dispositif de rangement est particulièrement apprécié par les voyageurs étant donné qu'ils peuvent conserver leurs bagages au plus près de leurs sièges dans la voiture ferroviaire.

Pour un véhicule ferroviaire étagé du type train à grande vitesse « TGV®» comportant un étage inférieur et un étage supérieur, il n'est pas possible d'installer des dispositifs de rangement traditionnels. En effet, la hauteur globale d'un véhicule ferroviaire est limitée du fait de normes, notamment, européennes. La hauteur sous plafond d'un étage d'un véhicule étagé est plus faible que la hauteur sous plafond d'un véhicule non étagé. Aussi, si des bagages volumineux doivent être rangés, il est nécessaire de les placer dans des compartiments situés au niveau du sol. Un tel rangement diminue le nombre de sièges pouvant être positionnés, ce qui présente un inconvénient pour l'opérateur ferroviaire. En outre, comme expliqué précédemment, les voyageurs sont contraints d'être éloignés de leurs bagages.

En pratique, chaque étage comporte des dispositifs de rangement, appelés «clayette», permettant le rangement d'effets personnels de très petite taille étant donné que la largeur d'un dispositif de rangement est de l'ordre de 25 cm et qu'il est situé à environ 25 cm du plafond, ce qui rend impossible le rangement d'un bagage du type cabine.

L'invention a donc pour but de remédier à ces inconvénients en proposant un nouveau type de dispositif de rangement permettant le rangement d'un bagage de type cabine en partie supérieure lorsque la hauteur sous plafond est faible.

Bien que l'invention soit née à l'origine pour un véhicule ferroviaire, l'invention s'applique à tout véhicule de transport.

On connaît dans l'art antérieur par les demandes de brevet DE508576, US2093359 et FR2965525A1 des systèmes de support de bagage mais ces derniers ne permettent pas un support stable pour un effet personnel de petite taille et un effet personnel de grande taille tout en ayant un encombrement limité.

### PRESENTATION GENERALE DE L'INVENTION

A cet effet, l'invention concerne un dispositif de rangement selon la revendication 1.

Grâce à l'invention, un voyageur dispose d'un dispositif de rangement qui peut évoluer entre une position rentrée présentant un encombrement limité et une position sortie dans laquelle un bagage de type cabine peut être reçu.

De manière avantageuse, en position rentrée, le dispositif de rangement possède un encombrement analogue à un dispositif de rangement selon l'art antérieur, ce qui est avantageux. L'invention est particulièrement avantageuse lorsque le véhicule de transport possède une hauteur sous plafond plus importante à distance des parois de fixation. Plus le dispositif est loin de la paroi, plus l'espace disponible est important.

De préférence, la hauteur de la partie auxiliaire est plus faible en position sortie qu'en position rentrée. Une telle position abaissée facilite la mise en place d'un bagage de poids élevé. En position rentrée, la position haute évite au voyageur de heurter le dispositif de rangement.

De manière préférée, la partie auxiliaire est articulée à la partie principale. De tels moyens de déplacement sont robustes et permettent un déplacement contrôlé de la partie auxiliaire. De préférence, la partie auxiliaire est articulée à la partie principale selon un axe parallèle à l'axe selon lequel s'étend le dispositif de rangement. Ainsi, le dispositif se déploie orthogonalement à la fenêtre du voyageur, ce qui permet de confiner le déploiement à l'espace alloué au voyageur. Ainsi, chaque voyageur peut déployer son dispositif de rangement sans gêner ses voisins.

Selon un aspect préféré, la partie auxiliaire est configurée pour s'étendre sur la partie principale en position rentrée de manière à conserver un dispositif compact. En outre, le déplacement de la partie auxiliaire en position sortie est facilité par la gravité. De préférence, la partie auxiliaire est configurée pour former avec la partie principale un angle compris entre 160° et 205° en position sortie.

De préférence, la partie auxiliaire comporte un organe de support qui est adapté pour s'étendre de manière adjacente à la paroi du véhicule en position rentrée. Ainsi, aucun effet personnel ne risque de tomber entre le dispositif de rangement et la paroi.

Selon l'invention, la partie auxiliaire comporte au moins un organe de liaison et un organe de support monté de manière articulée par rapport audit organe de liaison de manière à modifier l'inclinaison de l'organe de support lorsque la partie auxiliaire est en position rentrée ou en position sortie. De préférence, la partie auxiliaire comporte deux organes de liaison et un organe de support monté de manière articulée aux organes de liaison. Les organes de liaison sont de préférence articulés à la partie principale. L'inclinaison de l'organe de support est optimale pour toute position.

Selon l'invention, la partie auxiliaire comporte un organe de support comportant une première face et une deuxième face opposée à la première face, l'organe de support est adapté pour supporter un effet personnel sur sa première face en position rentrée et sur sa deuxième face en position sortie. Ainsi, un même organe de support est utilisé mais les faces de support sont différentes en fonction de la position du dispositif de rangement.

L'invention concerne également un véhicule de transport comportant une paroi, de préférence verticale, et au moins un dispositif de rangement tel que présenté précédemment, la partie principale étant solidarisée à la paroi du véhicule de transport.

De préférence, le véhicule comportant un plafond, la distance entre la partie auxiliaire et le plafond est plus importante en position sortie qu'en position rentrée. Ainsi, un bagage de dimensions importantes peut être rangé lorsque le dispositif de rangement est en position sortie.

L'invention concerne en outre un ensemble d'un dispositif de rangement tel que présenté précédemment et un bagage situé entre la partie principale et la partie auxiliaire lorsque le dispositif est en position sortie. Ainsi, l'espace formé entre la partie principale et la partie auxiliaire peut être utilisé de manière avantageuse.

L'invention concerne aussi une méthode d'utilisation d'un dispositif de rangement, tel que présenté précédemment, comportant une partie principale fixée à une paroi d'un véhicule de transport, le dispositif de rangement étant en position rentrée, la méthode comprenant :
- une étape de déplacement de la partie auxiliaire en position sortie de manière à ce qu'elle s'étende à distance de la paroi du véhicule et
- une étape de positionnement d'un effet personnel sur la partie auxiliaire afin de le ranger.

L'utilisation d'un tel dispositif est simple et pratique.

### PRESENTATION DES FIGURES

L'invention sera mieux comprise à la lecture de la description qui va suivre, donnée uniquement à titre d'exemple, et se référant aux dessins annexés sur lesquels :
- la figure 1 est une représentation schématique d'un étage supérieur d'une voiture ferroviaire comportant trois dispositifs de rangement selon une forme de réalisation de l'invention,
- la figure 2 est une représentation schématique en perspective d'un dispositif de rangement de la figure 1 en position sortie,
- la figure 3 est une représentation schématique en perspective d'un dispositif de rangement de la figure 1 en position rentrée,
- la figure 4 est une représentation schématique de côté d'un dispositif de rangement de la figure 1 en position rentrée,
- la figure 5 est une représentation schématique de côté d'un dispositif de rangement de la figure 1 en position sortie, et
- la figure 6 est une représentation schématique de côté du dispositif de rangement de la figure 5 avec un bagage.

Il faut noter que les figures exposent l'invention de manière détaillée pour mettre en œuvre l'invention, lesdites figures pouvant bien entendu servir à mieux définir l'invention le cas échéant.

### DESCRIPTION D'UN OU PLUSIEURS MODES DE REALISATION ET DE MISE EN OEUVRE

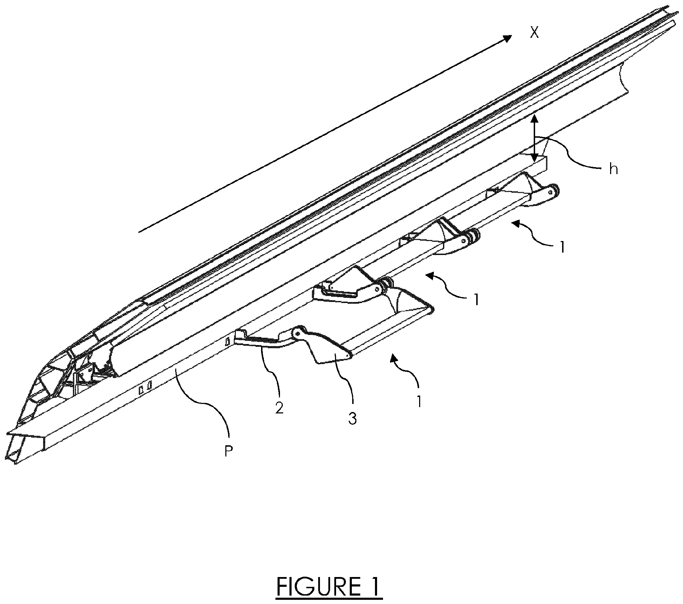

En référence à la figure 1, il est représenté de manière partielle une voiture ferroviaire d'un véhicule ferroviaire. La voiture ferroviaire s'étend longitudinalement selon un axe X et comporte des parois sensiblement verticales P dans lesquelles sont montées des fenêtres (non représentées).

Comme illustré à la figure 1, la voiture ferroviaire comporte un plafond reliant les parois verticales de la voiture. Dans cette forme de réalisation, le plafond n'est pas horizontal mais incurvé de manière à ce que la hauteur sous plafond soit plus importante au centre de la voiture ferroviaire qu'à proximité des parois verticales P. La voiture ferroviaire comporte également un plancher sur lequel sont fixés plusieurs sièges.

La voiture ferroviaire comporte trois dispositifs de rangement 1 selon l'invention qui sont fixés à une paroi verticale P en partie supérieure, c'est à dire, au-dessus des fenêtres et sous le plafond. De manière préférée, chaque dispositif de rangement 1 est situé à une distance h du plafond qui est inférieure à 45 cm, de préférence, moins de 25 cm.

Chaque dispositif de rangement 1 s'étend longitudinalement selon l'axe X, les dispositifs de rangement 1 étant adjacents les uns des autres et alignés selon un axe X de manière à permettre aux voyageurs de disposer de leurs effets personnels à proximité de leurs sièges.

Comme illustré aux figures 1 à 3, chaque dispositif de rangement 1 comprend une partie principale 2, fixée à la paroi verticale P, et une partie auxiliaire 3, adaptée pour supporter un effet personnel. L'invention est remarquable en ce que la partie auxiliaire 3 est reliée à ladite partie principale 2 par des moyens de déplacement de manière à permettre à la partie auxiliaire 3 de se déplacer entre une position rentrée M1 dans laquelle la partie auxiliaire 3 s'étend à proximité de la paroi verticale P afin de permettre le rangement d'un effet personnel de taille réduite et une position sortie M2 dans laquelle la partie auxiliaire 3 s'étend à distance de la paroi verticale P afin de permettre le rangement d'un effet personnel. Dans cet exemple, la partie auxiliaire 3 s'étend à 25 cm de la paroi P en position rentrée M1 et 45 cm en position sortie M2.

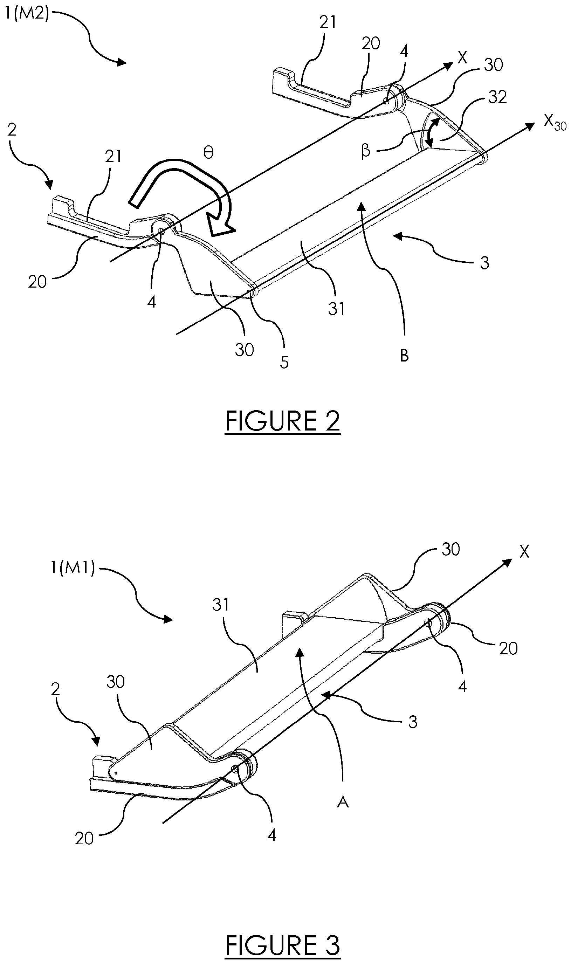

En référence à la figure 2 représentant un dispositif de rangement 1 en position sortie M2, la partie principale 2 comporte deux bras latéraux 20 qui sont parallèles. Chaque bras latéral 20 comporte une extrémité proximale solidaire de la paroi verticale P et une extrémité distale qui est relié à la partie auxiliaire 3 comme cela sera détaillé par la suite. Les bras latéraux 20 s'étendent orthogonalement à l'axe X selon lequel s'étend le dispositif de rangement 1. De manière préférée, l'écart longitudinal (défini selon l'axe X) entre les bras latéraux 20 est identique à l'écart entre les lieux de fixation d'un dispositif de rangement selon l'art antérieur du type «clayette», en particulier, de l'ordre de 55 cm. Ainsi, un dispositif de rangement 1 selon l'invention peut être mis en place en lieu et place d'un dispositif de rangement selon l'art antérieur.

Toujours en référence à la figure 2, chaque bras latéral 20 comporte des moyens de réception 21 de la partie auxiliaire 3 en position rentrée M1 afin de permettre de la stabiliser. De préférence, les moyens de réception 21 sont situés au niveau de la partie supérieure de chaque bras latéral 20. Dans cette forme de réalisation, les moyens de réception 21 se présentent sous la forme d'une encoche mais il va de soi qu'ils pourraient également se présenter sous la forme d'une empreinte.

En référence aux figures 2 et 3, la partie auxiliaire 3 comporte deux organes de liaison 30 reliés par un organe de support 31. Dans cette forme de réalisation, l'organe de support 31 est plan et possède une forme rectangulaire mais il va de soi qu'il pourrait posséder une forme différente. L'organe de support 31 s'étend parallèlement à l'axe X et les organes de liaison 30 s'étendent orthogonalement audit axe X.

Comme indiqué précédemment, la partie auxiliaire 3 est reliée à ladite partie principale 2 par des moyens de déplacement. De manière préférée, la partie auxiliaire 3 est articulée à la partie principale 2 par une liaison pivot 4 selon un axe parallèle à l'axe selon lequel s'étend le dispositif de rangement 1. Dans cet exemple la partie auxiliaire 3 est configurée pour former avec la partie principale 2 un angle θ compris entre 160 et 205° en position sortie M2. A cet effet, la partie principale 2 et la partie auxiliaire 3 comportent des moyens de butée pour définir de manière précise l'angle θ afin que la partie auxiliaire 3 s'étend à distance de la paroi verticale P en position sortie. De manière préférée, la partie auxiliaire 3 est sensiblement alignée avec la partie principale 2 de manière à augmenter la longueur en saillie depuis la paroi verticale 2.

Dans cet exemple, en référence à la figure 2, l'organe de support 31 est articulé aux organes de liaison 30 par une liaison pivot 5 selon un axe X₃₀ afin de permettre une inclinaison différente de l'organe de support 31 en position rentrée M1 et en position sortie M2. Les organes de liaison 30 comportent des moyens de butée configurés pour limiter l'inclinaison de l'organe de support 31. Dans cette forme de réalisation, les moyens de butée se présentent sous la forme d'une empreinte 32 formée dans la face intérieure de l'organe de liaison 30 comme illustré à la figure 2. De préférence, les moyens de butée autorisent un débattement angulaire β maximal de 45°.

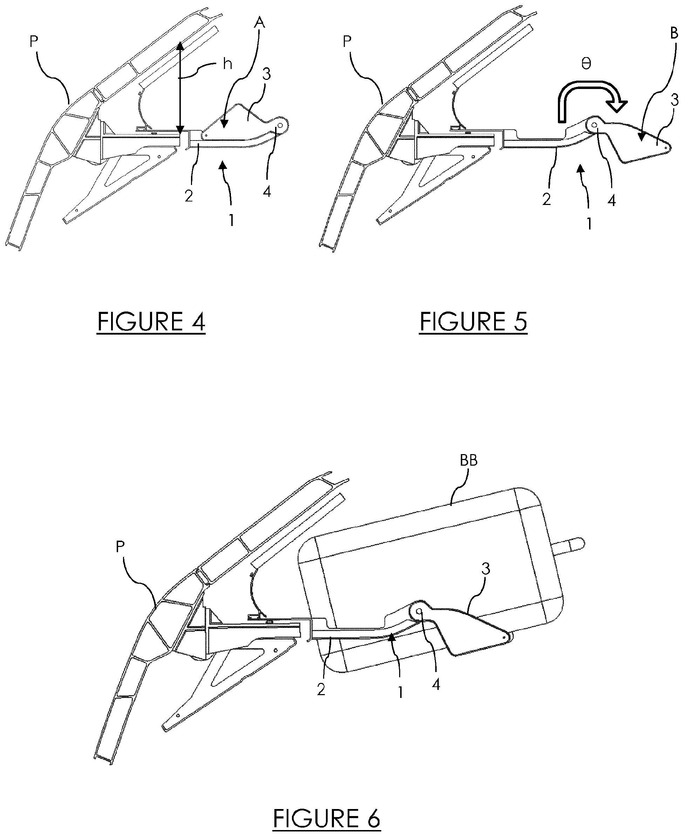

En position sortie M2, l'organe de support 31 est incliné vers la paroi P, c'est-à-dire, son extrémité la plus proche de la paroi P est plus basse que son extrémité la plus éloignée de la paroi P comme illustré à la figure 6. De préférence, l'organe de support 31 est de préférence incliné par rapport au plan horizontal d'un angle d'inclinaison compris entre 5° et 15° de manière à incliner le bagage lorsqu'il est rangé comme cela sera présenté par la suite.

De manière avantageuse, la hauteur de la partie auxiliaire 3, en particulier l'organe de support 31, est plus basse en position sortie M2 qu'en position rentrée M1. Une telle caractéristique est avantageuse car elle permet d'augmenter l'espace vertical pour le rangement d'un bagage. Une telle caractéristique est d'autant plus avantageuse que la hauteur sous plafond est plus importante au centre de la voiture ferroviaire qu'à proximité des parois verticales P comme indiqué précédemment.

Le dispositif de rangement 1 est ouvert en position sortie M2 et permet un support discret d'un bagage, c'est-à-dire, en une pluralité de points de supports élémentaires. La surface de support n'est pas continue, ce qui limite la masse du dispositif de rangement 1 et son encombrement, ce qui est avantageux.

De manière préférée, en référence aux figures 2 et 3, la partie auxiliaire 3 comporte un organe de support 31 comportant une première face A et une deuxième face B opposée à la première face A, la partie auxiliaire 3 est adaptée pour supporter un bagage sur sa première face A en position rentrée M1 et sur sa deuxième face B en position sortie M2.

En référence à la figure 3, la partie auxiliaire 3 est configurée pour s'étendre sur la partie principale 2 en position rentrée M1. De manière préférée, l'organe de support 31 est adapté pour s'étendre de manière adjacente à la paroi du véhicule P en position rentrée M1. Un tel positionnement permet d'éviter qu'un effet personnel de petites dimensions ne glisse entre l'organe de support 31 et la paroi verticale P. De préférence encore, l'organe de support 31 s'étend sensiblement dans le plan horizontal de manière à former un support stable pour un effet personnel de petites dimensions.

Un exemple de mise en œuvre de l'invention va être dorénavant présenté en référence aux figures 4 à 6 lors de l'utilisation d'un dispositif de rangement 1 par un voyageur.

Dans cet exemple, en référence à la figure 4, le dispositif de rangement 1 est situé au-dessus d'une fenêtre et au-dessus d'un siège pour voyageur. Le dispositif de rangement 1 est en position rentrée M1 afin de limiter l'encombrement dans la voiture ferroviaire et éviter qu'un voyageur ne le heurte lorsqu'il accède à son siège. L'organe de support 31 est en appui sur les bras latéraux 20 de la partie principale 2.

En position rentrée, le voyageur ne peut ranger que des effets personnels de faible dimension, ce qui correspond à un dispositif de rangement selon l'art antérieur du type « clayette ».

Afin de pouvoir ranger un bagage du type cabine à proximité de son siège, le voyageur déplace la partie auxiliaire 3 en position sortie M2 de manière à ce qu'elle s'étende à distance de la paroi du véhicule P comme illustré à la figure 5. Puis, en référence à la figure 6, le voyageur peut positionner un bagage BB sur la partie auxiliaire 3 afin de le ranger. Lors du déplacement de la partie auxiliaire 3, l'organe de support 31 pivote de manière à s'incliner selon un angle prédétermine. De manière avantageuse, le bagage BB est supporté de manière inclinée afin de loger sous le plafond incliné. Le bagage s'étend, en partie, à travers le dispositif de rangement 1, entre le dispositif auxiliaire 30 et la paroi verticale P, afin d'optimiser l'espace disponible. Le débattement longitudinal selon l'axe X du bagage BB est avantageusement limité par les bras latéraux 20 de la partie principale 2. Aussi, grâce à l'invention, un bagage BB de grandes dimensions peut être rangé de manière stable et sécurisée à proximité du siège d'un voyageur lorsque la hauteur sous plafond est réduite.

## Revendications

1. Dispositif de rangement (1) destiné à être monté à proximité du plafond d'un véhicule de transport, le dispositif de rangement (1) comprenant au moins une partie principale (2), adaptée pour être fixée à une paroi (P) d'un véhicule de transport, et au moins une partie auxiliaire (3), adaptée pour supporter un effet personnel, la partie auxiliaire (3) est reliée à ladite partie principale (2) par des moyens de déplacement de manière à permettre à la partie auxiliaire (3) de se déplacer entre :
i. une position rentrée (M1) dans laquelle la partie auxiliaire (3) s'étend à proximité de la paroi du véhicule (P) afin de permettre le rangement d'un effet personnel de taille réduite, notamment un vêtement, et
ii. une position sortie (M2) dans laquelle la partie auxiliaire (3) s'étend à distance de la paroi du véhicule (P) afin de permettre le rangement d'un effet personnel de taille importante, notamment un bagage de type cabine
**dispositif de rangement (1) caractérisé par le fait que** la partie auxiliaire (3) comporte au moins un organe de liaison (30) et un organe de support (31) monté articulé par rapport audit organe de liaison (30) de manière à modifier l'inclinaison de l'organe de support (31) lorsque la partie auxiliaire (3) est en position rentrée (M1) ou en position sortie (M2), la partie auxiliaire (3) comportant un organe de support (31) comportant une première face (A) et une deuxième face (B) opposée à la première face (A), l'organe de support (31) étant adapté pour supporter un effet personnel sur sa première face (A) en position rentrée (M1) et sur sa deuxième face (B) en position sortie (M2).

2. Dispositif selon la revendication 1, dans lequel la hauteur de la partie auxiliaire (3) est plus faible en position sortie (M2) qu'en position rentrée (M1).

3. Dispositif selon l'une des revendications 1 à 2, dans lequel la partie auxiliaire (3) est articulée à la partie principale (2).

4. Dispositif selon l'une des revendications 1 à 3, dans lequel, la partie auxiliaire (3) est configurée pour s'étendre sur la partie principale (2) en position rentrée (M1).

5. Dispositif selon l'une des revendications 1 à 4, dans lequel la partie auxiliaire (3) est configurée pour former avec la partie principale (2) un angle (θ) compris entre 160° et 205° en position sortie (M2).

6. Dispositif selon l'une des revendications 1 à 5, dans lequel la partie auxiliaire (3) comporte un organe de support (31) qui est adapté pour s'étendre de manière adjacente à la paroi du véhicule (P) en position rentrée (M1).

7. Véhicule de transport comportant une paroi (P) et au moins un dispositif de rangement (1) selon l'une des revendications 1 à 6, la partie principale (2) étant solidarisée à la paroi (P).

8. Méthode d'utilisation d'un dispositif de rangement (1) selon l'une des revendications 1 à 6 comportant une partie principale (2) fixée à une paroi (P) d'un véhicule de transport, le dispositif de rangement (1) étant en position rentrée (M1), la méthode comprenant :
- une étape de déplacement de la partie auxiliaire (3) en position sortie (M2) de manière à ce qu'elle s'étende à distance de la paroi du véhicule (P) et
- une étape de positionnement d'un effet personnel sur la partie auxiliaire (3) afin de le ranger.

## Patentansprüche

1. Vorrichtung zum Verstauen (1), die zur Montage in der Nähe der Decke eines Transportfahrzeugs bestimmt ist, wobei die Verstauvorrichtung (1) mindestens einen Hauptteil (2) umfasst, der zur Befestigung an einer Wand (P) eines Transportfahrzeugs geeignet ist, und mindestens einen Hilfsteil (3), der zur Abstützung einer persönlichen Sache geeignet ist, wobei der Hilfsteil (3) mit dem Hauptteil (2) durch Verlagerungsmittel derart verbunden ist, dass es dem Hilfsteil (3) gestattet ist, sich zu verlagern zwischen:
i. einer eingefahrenen Position (M1), in welcher sich der Hilfsteil (3) in der Nähe der Wand des Fahrzeugs (P) erstreckt, um das Verstauen einer persönlichen Sache beschränkter Größe, insbesondere einer Bekleidung, zu gestatten, und
ii. einer ausgefahrenen Position (M2), in welcher sich der Hilfsteil (3) von der Wand des Fahrzeugs (P) beabstandet erstreckt, um das Verstauen einer persönlichen Sache großer Größe, insbesondere eines Gepäcks vom Typ Kabine, zu gestatten,
wobei die Verstauvorrichtung (1) **dadurch gekennzeichnet ist, dass** der Hilfsteil (3) mindestens ein Verbindungsorgan (30) und ein Stützorgan (31) aufweist, das in Bezug auf das Verbindungsorgan (30) derart angelenkt angebracht ist, dass die Neigung des Stützorgans (31) geändert wird, wenn der Hilfsteil (3) in eingefahrener Position (M1) oder in ausgefahrener Position (M2) ist, wobei der Hilfsteil (3) ein Stützorgan (31) aufweist, das eine erste Fläche (A) und eine zweite Fläche (B) gegenüber der ersten Fläche (A) aufweist, wobei das Stützorgan (31) geeignet ist, eine persönliche Sache auf seiner ersten Fläche (A) in eingefahrener Position (M1) und auf seiner zweiten Fläche (B) in ausgefahrener Position (M2) zu stützen.

2. Vorrichtung nach Anspruch 1, wobei die Höhe des Hilfsteils (3) in ausgefahrener Position (M2) geringer als in eingefahrener Position (M1) ist.

3. Vorrichtung nach einem der Ansprüche 1 bis 2, wobei der Hilfsteil (3) am Hauptteil (2) angelenkt ist.

4. Vorrichtung nach einem der Ansprüche 1 bis 3, wobei der Hilfsteil (3) ausgelegt ist, um sich in eingefahrener Position (M1) über dem Hauptteil (2) zu erstrecken.

5. Vorrichtung nach einem der Ansprüche 1 bis 4, wobei der Hilfsteil (3) ausgelegt ist, um in ausgefahrener Position (M2) mit dem Hauptteil (2) einen Winkel (θ) zwischen 160° und 205° zu bilden.

6. Vorrichtung nach einem der Ansprüche 1 bis 5, wobei der Hilfsteil (3) ein Stützorgan (31) aufweist, das geeignet ist, sich in eingefahrener Position (M1) benachbart zur Wand des Fahrzeugs (P) zu erstrecken.

7. Transportfahrzeug, aufweisend eine Wand (P) und mindestens eine Verstauvorrichtung (1) nach einem der Ansprüche 1 bis 6, wobei der Hauptteil (2) mit der Wand (P) fest verbunden ist.

8. Methode zur Verwendung einer Verstauvorrichtung (1) nach einem der Ansprüche 1 bis 6, aufweisend einen Hauptteil (2), der an einer Wand (P) eines Transportfahrzeugs befestigt ist, wobei die Verstauvorrichtung (1) in eingefahrener Position (M1) ist, wobei die Methode umfasst:
- einen Verlagerungsschritt des Hilfsteils (3) in ausgefahrene Position (M2) derart, dass er sich von der Wand des Fahrzeugs (P) beabstandet erstreckt, und
- einen Positionierungsschritt einer persönlichen Sache auf dem Hilfsteils (3), um sie zu verstauen.

## Claims

1. A storage device (1) for being mounted in the proximity of the ceiling of a transport vehicle, the storage device (1) comprising at least one main part (2), adapted to be fastened to a wall (P) of a transport vehicle, and at least one auxiliary part (3), adapted to support a piece of personal effects, the auxiliary part (3) is connected to said main part (2) through moving means so as to enable the auxiliary part (3) to move between:
i. a retracted position (M1) in which the auxiliary part (3) extends in the proximity of the wall of the vehicle (P) in order to enable a reduced size piece of personal effects, especially an item of clothing, to be stored, and
ii. an extended position (M2) in which the auxiliary part (3) extends at a distance from the wall of the vehicle (P) in order to enable a large size piece of personal effects, especially a cabin type luggage, to be stored
the storage device (1) being **characterised in that** the auxiliary part (3) comprises at least one connecting member (30) and a support member (31) hingedly mounted relative to said connecting member (30) so as to change tilt of the support member (31) when the auxiliary part (3) is in the retracted position (M1) or the extended position (M2), the auxiliary part (3) comprising a support member (31) comprising a first face (A) and a second face (B) opposite the first face (A), the support member (31) being adapted to support a piece of personal effects on its first face (A) in the retracted position (M1) and on its second face (B) in the extended position (M2).

2. The device according to claim 1, wherein the height of the auxiliary part (3) is lower in the extended position (M2) than in the retracted position (M1).

3. The device according to one of claims 1-2, wherein the auxiliary part (3) is hinged to the main part (2).

4. The device according to one of claims 1-3, wherein, the auxiliary part (3) is configured to extend on the main part (2) in the retracted position (M1).

5. The device according to one of claims 1-4, wherein the auxiliary part (3) is configured to form, with the main part (2), an angle (θ) between 160° and 205° in the extended position (M2).

6. The device according to one of claims 1-5, wherein the auxiliary part (3) comprises a support member (31) which is adapted to extend adjacent to the wall (P) of the vehicle in the retracted position (M1).

7. A transport vehicle comprising a wall (P) and at least one a storage device (1) according to one of claims 1 to 6, the main part (2) being secured to the wall (P).

8. A method for using a storage device (1) according to one of claims 1-6, comprising a main part (2) fastened to a wall (P) of a transport vehicle, the storage device (1) being in the retracted position (M1), the method comprising:
- a step of moving the auxiliary part (3) into the extended position (M2) so that it extends at a distance from the wall (P) of the vehicle and
- a step of positioning a piece of personal effects on the auxiliary part (3) in order to store it.
